# EUROPEAN PATENT APPLICATION

(11) **EP 4 838 850 A1**
(43) Date of publication of application: **11.11.2026**
(21) Application number: 25752335.7
(22) Date of filing: 04.02.2025
(51) Int. Cl.: H04L 41/0663, H04L 43/10, H04L 41/342, H04L 43/06, H04L 67/145, H04W 88/14, H04W 24/04, H04W 84/04

(54) **METHOD AND DEVICE FOR PROCESSING CORE NETWORK FAILURE IN REDUNDANT NETWORK CORE COMMUNICATION NETWORK**

(30) Priority: 05.02.2024 KR 20240017713
(71) Applicant: LG Electronics Inc., Yeongdeungpo-gu Seoul 07336 (KR)
(72) Inventor: YUK, Seungjong, Seoul 07796 (KR); RYU, Hoyeon, Seoul 07796 (KR); JANG, Jaehyok, Seoul 07796 (KR)
(74) Representative: Vossius & Partner Patentanwälte Rechtsanwälte mbB
(86) International application number: PCT/KR2025/001633
(87) International publication number: WO 2025/170288

(57) **Abstract**

An embodiment relates to a method for processing a failure in a second core manager (CM) in a redundant network core communication network. The method involves: a second CM of a second core receiving a second core state request from a second access and mobility management function (AMF) of a second core; the second CM transmitting, to the second AMF, information indicating that the second core is in a standby state; the second CM checking the state of a first core; the second CM confirming that a failure has occurred in the first core; and the second CM transmitting, to the second AMF, information for notifying that the second core is in an active state, wherein the information notifying that the second core is in an active state is related to the switching of a virtual radio access network (vRAN) from the first core to the second core.

## Description

### TECHNICAL FIELD

The following description relates to a wireless communication system and, more particularly, to a method and apparatus for handling a core network failure in a redundant network core communication network.

### BACKGROUND

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars, and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control, and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability, and capacity as cables and that its management is simplified. Low delays and very low error probabilities are new requirements that need to be addressed with 5G

Finally, logistics and freight tracking are important use cases for mobile communications that enable the tracking of inventory and packages wherever they are by using location-based information systems. The logistics and freight tracking use cases typically require lower data rates but need wide coverage and reliable location information.

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

### DISCLOSURE

### Technical Problem

An object of the present disclosure is to provide a method and apparatus for handling a core network failure in a redundant network core communication network.

### Technical Solution

In an aspect of the present disclosure, provided is a failure handling method performed by a second core manager (CM) in a redundant network core communication network. The method includes: receiving, by the second CM of a second core, a second core status request from a second access and mobility management function (AMF) of the second core; transmitting, by the second CM to the second AMF, information indicating that the second core is in a standby state; checking, by the second CM, a status of a first core; confirming, by the second CM, occurrence of a failure in the first core; and transmitting, by the second CM to the second AMF, information indicating that the second core is in an active state. The information indicating that the second core is in the active state may be related to switching of a virtual radio access network (vRAN) from the first core to the second core.

In another aspect of the present disclosure, provided is a network function (NF) including a second CM in a redundant network core communication network. The NF includes: at least one processor; and at least one computer memory operably connected to the at least one processor and storing instructions that, when executed, cause the at least one processor to perform operations. The operations include: receiving, by the second CM of a second core, a second core status request from a second AMF of the second core; transmitting, by the second CM to the second AMF, information indicating that the second core is in a standby state; checking, by the second CM, a status of a first core; confirming, by the second CM, occurrence of a failure in the first core; and transmitting, by the second CM to the second AMF, information indicating that the second core is in an active state. The information indicating that the second core is in the active state may be related to switching of a vRAN from the first core to the second core.

In a further aspect of the present disclosure, provided is a non-transitory computer-readable medium storing program instructions for performing operations. The operations include: receiving, by a second CM of a second core, a second core status request from a second AMF of the second core; transmitting, by the second CM to the second AMF, information indicating that the second core is in a standby state; checking, by the second CM, a status of a first core; confirming, by the second CM, occurrence of a failure in the first core; and transmitting, by the second CM to the second AMF, information indicating that the second core is in an active state. The information indicating that the second core is in the active state may be related to switching of a vRAN from the first core to the second core.

The information indicating that the second core is in the active state triggers transmission of an Amf_configurationUpdate message from the second AMF to the vRAN.

Upon receiving the Amf_configurationUpdate message, the vRAN switches from the first core to the second core.

After transmission of the Amf_configurationUpdate message, an NG reset message is transmitted from the second AMF to the vRAN.

The NG reset message causes the vRAN to release a user equipment (UE).

After being released, the UE performs a network registration procedure with the second core.

The second CM confirms the occurrence of the failure in the first core based on at least one of a heartbeat failure, confirmation of allocation of an Internet Protocol address to a main NF, or virtual router redundancy protocol (VRRP).

When IP of N2, N3, and N6 is initially all allocated and the first core changes from the standby state to the active state through failover, the first CM requests RAN release from the second AMF of the second core.

When IP of N3 and N6 exists and IP of N2 does not exist, the first CM determines that the AMF is abnormal and brings down all points of delivery (PODs).

When IP of N3 and N6 does not exist and only IP of N2 exists, the first CM determines that a user plane function (UPF) is abnormal and brings down all PODs.

When a physical server down occurs in the first core, the second CM detects allocation of IP of N2, N3, and N6 and performs a failover operation.

### Advantageous Effects

According to an embodiment, a network transition time may be reduced by implementing an NF status check process (CM) for each network and implementing a self-network transition signaling flow for fast redundant failover.

### BRIEF DESCRIPTION OF THE DRAWINGS

The drawings accompanying the present disclosure are provided to aid understanding of embodiment(s), illustrate various implementation forms, and explain the principle together with the description of the specification.
FIG. 1 illustrates a non-roaming fifth generation (5G) system architecture.
FIG. 2 illustrates an overall 5G New Radio (NR) architecture.
FIG. 3 illustrates a redundant server network configuration.
FIG. 4 illustrates a detailed redundant failover flow when a conventional server-down failure occurs.
FIGS. 5 to 7 illustrate diagrams for describing embodiment(s).

### DETAILED DESCRIPTION

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IEEE 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

A successor to LTE-A, 5th generation (5G) new radio access technology (NR) is a new clean-state mobile communication system characterized by high performance, low latency, and high availability. 5G NR may use all available spectral resources including a low frequency band below 1 GHz, an intermediate frequency band between 1 GHz and 10 GHz, and a high frequency (millimeter) band of 24 GHz or above.

While the following description is given mainly in the context of LTE-A or 5G NR for the clarity of description, the technical idea of an embodiment of the present disclosure is not limited thereto.

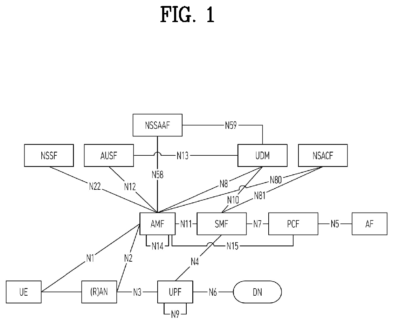

FIG. 1 illustrates a Non-Roaming 5G System Architecture disclosed in 3GPP TS 23.501. As shown, in the 5G Core Network, there are various Network Functions (NFs) such as Access and Mobility Management Function (AMF), User Plane Function (UPF), Session Management Function (SMF), and the like. A network function may be implemented as a network element in dedicated hardware, a software instance running on the dedicated hardware, or a virtualized function instantiated on an appropriate platform. For example, it may be executed in a cloud infrastructure.

Table 1 below shows an NF of the 5G Core Network and functions of the corresponding NF.

**[Table 1]**

| NF | function |
|---|---|
| AMF (Access and Mobility Management Function) | Access and mobility management functions |
| | RAN CP interface (N2) termination |
| | NAS (N1) termination, NAS encryption, and integrity protection. |
| | Registration management. |
| | Connection management |
| | Accessibility management. |
| | Mobility management. |
| | Legitimate blocking (for interfaces to AMF events and LI systems). |
| | Providing SM message transmission between UE and SMF |
| | Transparent proxy for SM message routing. |
| | Access authentication and access authorization |
| | Providing SMS message transmission between UE and SMSF |
| | SEAF (Security Anchor Function). Interacting with AUSF and UE and receiving an intermediate key generated as a result of a UE authentication process. In case of USIM-based authentication, searching by AMF for security data from AUSF |
| | Function for non-3GPP access networks |
| UPF (User Plane Function) | User plane functions |
| | Anchor point for Intra-/Inter-RAT mobility, if applicable. |
| | External PDU session point of interconnection to data network |
| | Routing and forwarding packets |
| | packet inspection |
| | User plane portion of the policy rule enforcement (e.g., gating, redirection, traffic coordination). |
| | Legitimate blocking (UP collection). |
| | Traffic use amount report. |
| | QoS processing for user plane (e.g. UL/DL rate application, reflective QoS display of DL). |
| | Uplink traffic verification (from SDF to QoS flow mapping). |
| | Marking transmission-level packets on uplink and downlink. |
| | Downlink packet buffering and downlink data notification triggering. |
| | Send and forward one or more "end markers" to the source NG-RAN node |
| SMF (Session Management Function) | Session Management Functions |
| | UE IP address assignment and management; |
| | Select and control UP function; |
| | Configure traffic coordination in UPF to route traffic to an appropriate target |
| | Control policy enforcement and some of QoS |
| | Downlink data notification. |
| PCF (Policy Control Function) | Policy Control Functions |
| | Supports a unified policy framework for managing network operations |
| | Enforce by providing policy rules to control plane function |
| | Access subscription information related to policy decisions in Unified Data Repository (UDR) |
| UDM (Unified Data Management) | Unified Data Management |
| | Generating 3GPP AKA authentication credentials. |
| | User identification processing |
| | Grant access authority based on subscription data (for example, roaming restriction). |
| | Management of UE's serving NF registration |
| | Support service/session continuity, e.g., maintain SMF/DNN allocation of an ongoing session |
| | MT-SMS delivery support. |
| | Legitimate blocking function |
| | Subscriptions management. |
| | SMS management. |
| AUSF(Authentic ation Server Function) | Support AUSF(Authentication Server Function) designated in SA WG3 |
| AF (Application Function) | Application influence on traffic routing |
| | Network exposure function access |
| | Interaction with policy frameworks for policy control |

In addition, there are various reference points such as N2, N3, and N4, which mean interfaces between different functions or nodes in the network architecture.

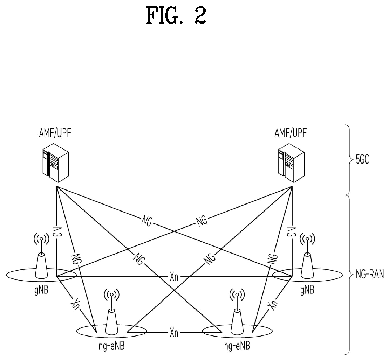

FIG. 2 illustrates an overall 5G NR architecture. A next-generation Node B (gNB) node is a node that provides NR user plane and control plane protocol terminations toward a user equipment (UE) and is connected to a 5G core network (5GC) via an NG interface. An ng-eNB node is a node that provides control plane protocol terminations toward a UE and is connected to the 5GC via an NG interface. As illustrated, the UE is connected to an air BS (gNB or ng-eNB) via an air interface.

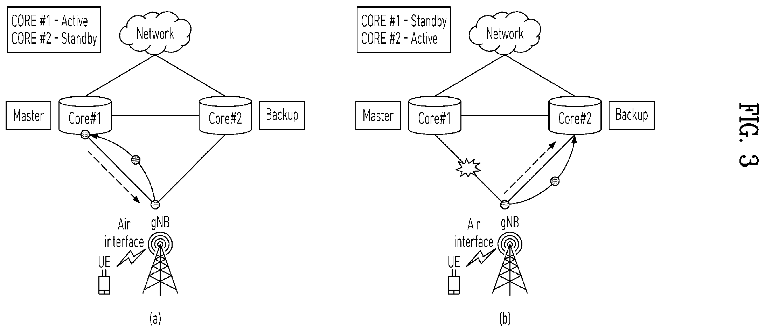

The basic redundant server network configuration of FIG. 3(a) has a structure in which the same core network (Core NW) redundancy is applied to RAN(gNB)#1 and two servers (#1 and #2). In a core switch (Core SW) layer, a network switching algorithm is operated based on the NG-FLEX specification of 3GPP, and main specifications related to NG-FLEX may refer to 23.501 6.3.5, 23.501 5.19.3, 23.501 5.19.5, 23.501 5.21.2, 38.410, and 38.413.

A radio access network (RAN) and a core are connected through a next generation application protocol (NG-AP) and perform control plane communication through an NG-SETUP procedure. After a UE boots and is connected to the RAN, the RAN simultaneously forms NG-SETUP-based control plane connections with Core#1 and Core#2. In this case, the UE is connected to Core#1 immediately after booting, and an actual session is established between the UE and Core#1 via the RAN. In contrast, Core#2 is only set up by the NG-AP protocol before session connection, and thus an actual traffic session is not assigned.

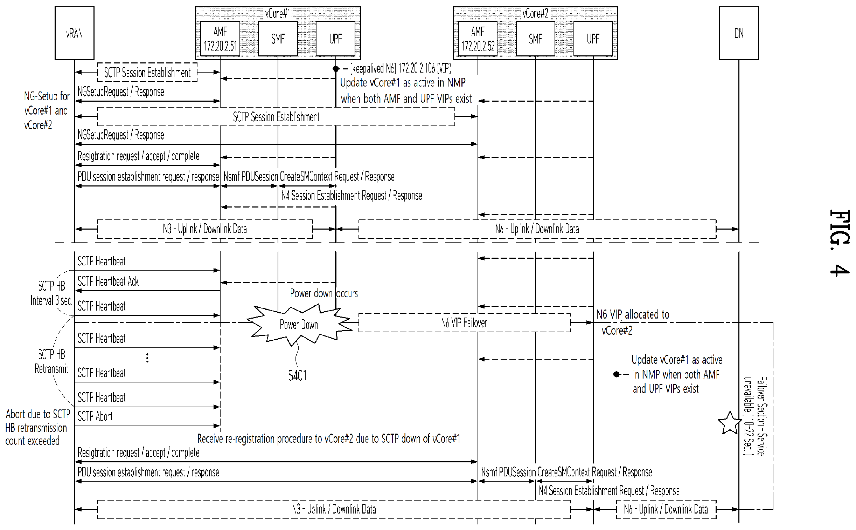

FIG. 4(b) illustrates a network procedure flow in a case where a failure occurs in a conventional redundant environment. When a server-down failure occurs in Core#1, a connection between the RAN and Core#1 is disconnected. In this case, Stream Control Transmission Protocol (SCTP) periodically checks a peer state through a heartbeat signal, and thus it takes a certain amount of time to recognize the server-down state. When Core#1 is determined to be down through the heartbeat check, the RAN regards Core#2 as an active core, and the UE performs a registration procedure with Core#2. In an active-standby structure, re-registration and connection switching may take about 10 seconds or more.

In the above description, the heartbeat signal of SCTP serves to monitor and maintain a connection state. Main purposes of the heartbeat may include endpoint reachability monitoring, round-trip time (RTT) measurement of an idle path, and path status checking in a multi-homing environment. SCTP may periodically transmit a HEARTBEAT chunk to monitor reachability of an endpoint, and a receiving endpoint may respond with a HEARTBEAT ACK chunk to confirm availability. A structure of the HEARTBEAT chunk may include a chunk type, a flag, a length, and an optional parameter. This heartbeat mechanism may perform important roles, such as monitoring states of multiple paths in the multi-homing environment, detecting a failure, and switching to an alternative path when necessary. An operation method of the heartbeat may include a process in which a transmitter transmits the HEARTBEAT chunk and a receiver immediately responds with the HEARTBEAT ACK chunk.

Referring to FIG. 3 together with FIG. 1 described above, three main interfaces may exist in the above-described 5G core network. First, N2 is a control plane interface between the RAN and an access and mobility management function (AMF), and may be responsible for important signaling connection between a BS and a core network. N2 may be a key element for performing a control function of a network. N3 refers to a user plane interface between the RAN and a user plane function (UPF), and may serve as an important path through which actual data traffic of users is transmitted. Through N3, actual data of a user may be stably transmitted. N6 may be defined as an interface between the UPF and an external data network. N6 may be responsible for connection to the Internet or various external services and may finally provide a path through which the user is capable of communicating with an external network.

FIG. 4 illustrates a detailed redundant failover flow when a conventional server-down failure occurs. As illustrated in FIG. 4, when a physical server failure (for example, power cable down, S401) occurs, a virtual radio access network (vRAN) performs an SCTP heartbeat check on an AMF of vCore#1. As illustrated, the SCTP heartbeat check may take about 8 to 18 seconds. After an SCTP detection process is completed, the RAN detects an NG-SETUP connection failure with existing Core#1, attempts a connection to Core#2, and performs network registration of a UE. As a result, a total Core N/W switching time may take 10 seconds or more.

Accordingly, the following description discloses a network failure recovery method and apparatus for overcoming a failover (failure) problem occurring in one core in a redundant network core communication network.

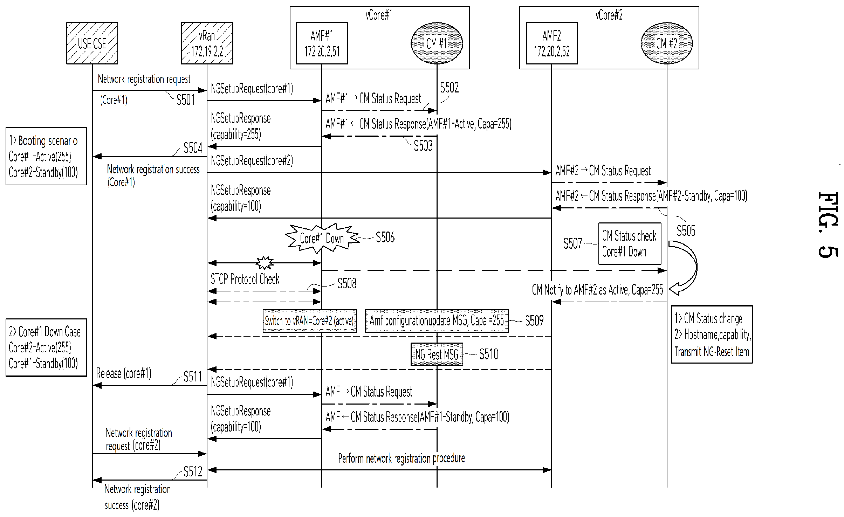

Referring to FIG. 5, in a redundant network core communication network according to an embodiment of the present disclosure, a failure handling method of a second core manager (second CM, CM#2) may include receiving, by the second CM of a second core, a status (vCore Status) request of the second core from a second AMF (AMF#2) of the second core, and transmitting, by the second CM, information indicating that the second core is in a standby state to the second AMF (S505). The second CM may check a state of a first core (CM#1), and the second CM may confirm that a failure has occurred in the first core (S507). The second CM may transmit, to the second AMF, information indicating that the second core is in an active state.

The information indicating that the second core is in the active state may be related to switching of a vRAN from the first core to the second core. Specifically, the information indicating that the second core is in the active state may trigger transmission (S509) of an Amf_configurationUpdate message from the second AMF to the vRAN. That is, the second AMF may transmit the Amf_configurationUpdate message to the vRAN. Upon receiving the Amf_configurationUpdate message, the vRAN may switch from the first core to the second core. After the Amf_configurationUpdate message is transmitted, an NG reset message may be transmitted from the second AMF to the vRAN (S510). The NG reset message may cause the vRAN to release a UE (S511). After being released, the UE may perform a network registration procedure with the second core (S512).

The second CM may confirm that a failure has occurred in the first core based on at least one of a heartbeat failure, checking of main network function (NF) IP allocation, or virtual router redundancy protocol (VRRP).

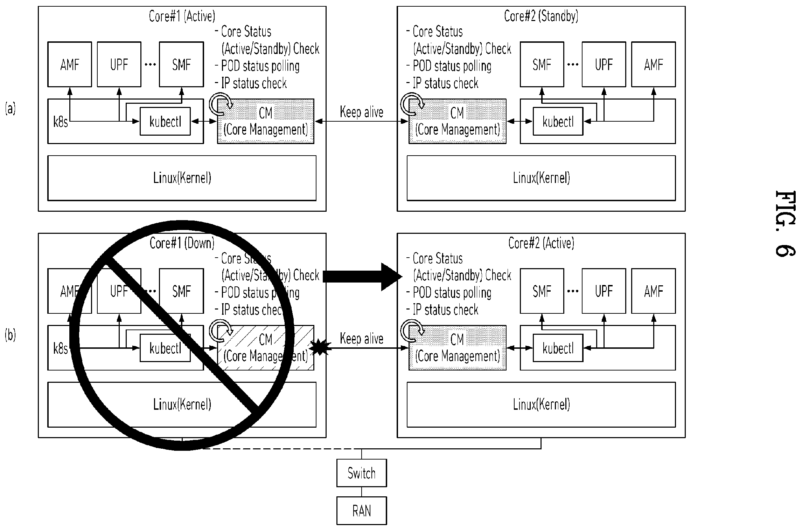

The second CM is a CM according to an embodiment of the present disclosure and is illustrated in FIG. 6(a), which illustrates a monitoring process (CM) structure. The CM may include a Linux-based monitoring process generation/check algorithm. The CM may perform at least one of state check monitoring of an NF POD in each core (a smallest deployable computing unit that may be created and managed in Kubernetes), monitoring of whether an IP address is allocated to a main NF, or SCTP checking (server down).

FIG. 6(b) illustrates failover, that is, a server down case as a monitoring process of the CM. Referring to an occurrence flow of an SCTP down case (server down), a CM process of Core#2 may recognize occurrence of server down in Core#1. As a method of recognizing the server down, at least one of a heartbeat failure, checking of main NF IP allocation, or VRRP may be used.

A Core#2 monitoring process may transmit a signaling message to an AMF. Here, the signaling message may correspond to a status information signal, Amf_configurationUpdate, an NG-Reset message trigger signal, and the like.

A Core#2 AMF may transmit an event to a RAN through the signaling message. In addition, the RAN may receive the event and perform a fast network re-registration procedure for a UE.

According to this method, a network re-registration time may be reduced from a conventional 10 seconds to about 7 seconds.

In FIG. 6, kubectl is a command line interface for controlling a Kubernetes cluster. As illustrated, kubectl may be used by the CM to check and manage a state of each POD. In a failover situation, the CM may monitor states of active/standby PODs through kubectl and may restart a POD or change a state when necessary.

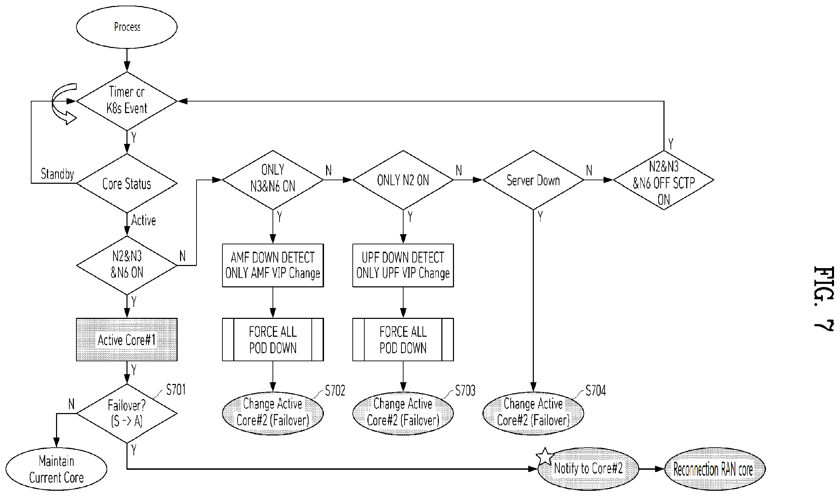

FIG. 7 illustrates content related to a redundancy check algorithm of a CM according to an embodiment.

Referring to FIG. 7, in a down case logic algorithm, when N2, N3, and N6 Internet Protocol (IP) addresses are initially all allocated in a core, the corresponding core changes from a standby state to an active state through failover (S701). Thus, a RAN release request event is transmitted to an AMF. When this operation is applied to the above-described embodiment, if N2, N3, and N6 IP addresses are initially all allocated and the first core changes from a standby state to an active state through failover, the first CM may transmit a RAN release request to a second AMF of the second core.

Regarding S702, when an AMF Pod is down, if an IP address of N2 does not exist, a failover algorithm may determine a corresponding NF (AMF) to be abnormal and may bring down all PODs of an active core, thereby performing failover. When this operation is applied to the above-described embodiment, if IP addresses of N3 and N6 exist and an IP address of N2 does not exist, the first CM may determine that the AMF is abnormal and bring down all points of delivery (PODs).

Regarding S703, when a UPF Pod is down, if IP addresses of N3 and N6 do not exist, a failover algorithm may determine a corresponding NF (UPF) to be abnormal and may bring down all PODs of an active core, thereby performing failover. When this operation is applied to the above-described embodiment, if IP addresses of N3 and N6 do not exist and only an IP address of N2 exists, the first CM may determine that the UPF is abnormal and bring down all PODs.

Regarding S704, in a physical server down failover algorithm, when a core manager of a standby core detects N2, N3, and N6 IP allocation, the physical server down failover algorithm performs failover. When this operation is applied to the above-described embodiment, when a physical server down occurs in the first core, the second CM may detect N2, N3, and N6 IP allocation and perform a failover operation from standby to active in the second core.

In relation to the above description, an NF including a second CM in a redundant network core communication network may include at least one processor and at least one computer memory operably connected to the at least one processor and storing instructions that, when executed, cause the at least one processor to perform operations. The operations may include: receiving, by the second CM of a second core, a second core status request from a second AMF of the second core; transmitting, by the second CM to the second AMF, information indicating that the second core is in a standby state; checking, by the second CM, a status of a first core; confirming, by the second CM, occurrence of a failure in the first core; and transmitting, by the second CM to the second AMF, information indicating that the second core is in an active state. The information indicating that the second core is in the active state may be related to switching of a vRAN from the first core to the second core.

In addition, a non-transitory computer-readable medium may store program instructions for performing the following operations. The operations may include: receiving, by a second CM of a second core, a second core status request from a second AMF of the second core; transmitting, by the second CM to the second AMF, information indicating that the second core is in a standby state; checking, by the second CM, a status of a first core; confirming, by the second CM, occurrence of a failure in the first core; and transmitting, by the second CM to the second AMF, information indicating that the second core is in an active state. The information indicating that the second core is in the active state may be related to switching of a vRAN from the first core to the second core.

In the above description, IP may be a virtual IP (VIP).

According to an embodiment of the present disclosure, a network transition time may be reduced by implementing an NF status check process (CM) for each network and implementing a self-network transition signaling flow for fast redundant failover.

That is, the present disclosure relates to transmitting, by an NF state process, a notification signal to Core#2 immediately upon detecting a failure using a Core#1 NF/server state check algorithm, such that a UE connected to a vRAN rapidly performs network re-registration with Core#2.

### INDUSTRIAL APPLICABILITY

The embodiments described above may be applied to redundant and non-redundant network structures using a private 5G network (for example, private 5G) in factories, hospitals, and the like.

## Claims

1. A failure handling method of a second core manager (CM) in a redundant network core communication network, the method comprising:
receiving, by the second CM of a second core, a second core status request from a second access and mobility management function (AMF) of the second core;
transmitting, by the second CM to the second AMF, information indicating that the second core is in a standby state;
checking, by the second CM, a status of a first core;
confirming, by the second CM, occurrence of a failure in the first core; and
transmitting, by the second CM to the second AMF, information indicating that the second core is in an active state,
wherein the information indicating that the second core is in the active state is related to switching of a virtual radio access network (vRAN) from the first core to the second core.

2. The method of claim 1, wherein the information indicating that the second core is in the active state triggers transmission of an Amf_configurationUpdate message from the second AMF to the vRAN.

3. The method of claim 2, wherein upon receiving the Amf_configurationUpdate message, the vRAN switches from the first core to the second core.

4. The method of claim 2, wherein, after transmission of the Amf_configurationUpdate message, an NG reset message is transmitted from the second AMF to the vRAN.

5. The method of claim 4, wherein the NG reset message causes the vRAN to release a user equipment (UE).

6. The method of claim 5, wherein, after being released, the UE performs a network registration procedure with the second core.

7. The method of claim 1, wherein the second CM confirms the occurrence of the failure in the first core based on at least one of a heartbeat failure, checking of main network function (NF) Internet Protocol (IP) allocation, or virtual router redundancy protocol (VRRP).

8. The method of claim 1, wherein, when Internet Protocol (IP) of N2, N3, and N6 is initially all allocated and the first core changes from the standby state to the active state through failover, the first CM requests Radio Access Network (RAN) release from the second AMF of the second core.

9. The method of claim 1, wherein, when Internet Protocol (IP) of N3 and N6 exists and IP of N2 does not exist, the first CM determines that the AMF is abnormal and brings down all points of delivery (PODs).

10. The method of claim 1, wherein, when Internet Protocol (IP) of N3 and N6 does not exist and only IP of N2 exists, the first CM determines that a user plane function (UPF) is abnormal and brings down all points of delivery (PODs).

11. The method of claim 1, wherein, when a physical server down occurs in the first core, the second CM detects allocation of Internet Protocol (IP) of N2, N3, and N6 and performs a failover operation.

12. A network function (NF) including a second core manager (CM) in a redundant network core communication network, the NF comprising:
at least one processor; and
at least one computer memory operably connected to the at least one processor and storing instructions that, when executed, cause the at least one processor to perform operations comprising:
receiving, by the second CM of a second core, a second core status request from a second access and mobility management function (AMF) of the second core;
transmitting, by the second CM to the second AMF, information indicating that the second core is in a standby state;
checking, by the second CM, a status of a first core;
confirming, by the second CM, occurrence of a failure in the first core; and
transmitting, by the second CM to the second AMF, information indicating that the second core is in an active state,
wherein the information indicating that the second core is in the active state is related to switching of a virtual radio access network (vRAN) from the first core to the second core.

13. A non-transitory computer-readable medium storing program instructions for performing operations comprising:
receiving, by a second core manager (CM) of a second core, a second core status request from a second access and mobility management function (AMF) of the second core;
transmitting, by the second CM to the second AMF, information indicating that the second core is in a standby state;
checking, by the second CM, a status of a first core;
confirming, by the second CM, occurrence of a failure in the first core; and
transmitting, by the second CM to the second AMF, information indicating that the second core is in an active state,
wherein the information indicating that the second core is in the active state is related to switching of a virtual radio access network (vRAN) from the first core to the second core.
